# EUROPÄISCHE PATENTSCHRIFT

(11) **EP 2 495 069 B1**
(45) Veröffentlichungstag und Bekanntmachung des Hinweises auf die Patenterteilung: **17.07.2013**
(21) Anmeldenummer: 11157030.5
(22) Anmeldetag: 04.03.2011
(51) Int. Cl.: B23Q 1/01, B23Q 1/34, B23Q 11/00, B23Q 17/22, G05B 19/404

(54) **Werkzeugmaschine mit einem Werkstücktisch**
Machine tool with a workpiece table
Machine-outil dotée d'une table de pièce usinée

(43) Veröffentlichungstag der Anmeldung: 05.09.2012
(73) Patentinhaber: Mikron Agie Charmilles AG, 2560 Nidau (CH)
(72) Erfinder: Bratschi, Frank, 2503, Biel (CH); Konvicka, Jan, 2502, Biel (CH); Kindler, Markus, 4553, Subingen (CH)
(74) Vertreter: De Colle, Piergiacomo

(56) Entgegenhaltungen:
- DE-A1- 3 829 022
- JP-A- 63 007 248
- US-B1- 6 230 070

## Beschreibung

Die Erfindung betrifft eine Werkzeugmaschine mit einem Maschinengestell und einem Werkstücktisch.

Bei Werkzeugmaschinen der eingangs genannten Art können aufgrund unterschiedlicher Werkstück- und Bearbeitungsbelastungen des Werkstücktisches Verformungen und dadurch Abweichungen in der Werkzeugmaschinengeometrie auftreten. Diese Geometrieabweichungen können die Werkstückgenauigkeit vermindern. Der Bedarf nach hochgenauen Werkstücken und/oder höherer Automatisierung und/oder vergrößerter Produktivität macht eine Eliminierung, zumindest jedoch eine Reduzierung dieser Geometrieabweichungen notwendig. Alternativ oder zusätzlich können bei der Bearbeitung unerwünschte Schwingungen auftreten. Diese Schwingungen beeinflussen die Bearbeitungsleistung der Werkzeugmaschine und vermindern die Genauigkeit sowie die Oberflächengüte der Werkstücke.

Aus der DE 10 2006 049 867 A1 ist eine Werkzeugmaschine bekannt, die auf einem Werkstücktisch eine Werkstückeinspannvorrichtung zur Einspannung eines Werkstücks aufweist. Die Werkstückeinspannvorrichtung ist mittels Piezoaktoren bewegbar, um während des Bearbeitungsvorgangs auftretende Schwingungen zu reduzieren. Hierzu befindet sich auf dem Werkstücktisch ein sogenannter Piezotisch, der rahmenartig ausgebildet ist, wobei sich innerhalb des Rahmens die Werkstückeinspannvorrichtung befindet. Ein Piezoaktor sorgt für die Höhenpositionierung der Werkstückeinspannvorrichtung und vier weitere Piezoaktoren positionieren die Werkstückeinspannvorrichtung relativ zum Rahmen. Zusätzlich zu der aktiven Lagerung mittels der Piezoaktoren ist eine passive Lagerung vorgesehen, die dadurch realisiert ist, dass parallel zu jedem Piezoaktor ein Federbein wirkt. Um Stellbewegungen der Piezoaktoren durchzuführen ist eine Regelung vorgesehen, die Abweichungen der Lage der Werkstückeinspannvorrichtung gegenüber dem fest auf dem Werkstücktisch montierten Piezotisch registriert und zur Vermeidung von Schwingungen entsprechend ausregelt. Aus alledem ergibt sich, dass der bekannten Werkzeugmaschine eine Piezoeinrichtung zugeordnet wird, um eine Werkstückeinspannvorrichtung zur Vermeidung von Schwingungen zu positionieren. Die eingangs erwähnten Geometrieabweichungen einer Werkzeugmaschine werden dadurch jedoch nicht beeinflusst. Die Einsatzmöglichkeiten einer derartigen, bekannten Anordnung sind daher begrenzt und erfordern in Abhängigkeit von der Größe und dem Gewicht des Werkstücks entsprechende Ausführungsformen des Piezotisches und der Piezoaktoren nebst Federbeinen.

Der Erfindung liegt die Aufgabe zugrunde, eine Werkzeugmaschine der eingangs genannten Art zu schaffen, mit der hochgenaue Werkstücke mit erstklassiger Oberflächengüte herstellbar sind, ohne dass auf die Werkstücke abgestimmte zusätzliche Einrichtungen erforderlich sind.

Diese Aufgabe wird erfindungsgemäß dadurch gelöst, dass der Werkstücktisch an einer seiner Seiten mittels einer Haltevorrichtung am Maschinengestell gehalten ist, wobei die Haltevorrichtung mindestens zwei, an der genannten Seite des Werkstücktischs beabstandet zueinander liegende Halteelemente aufweist, die auf unterschiedlichen Höhenpositionen angeordnet sind, sodass ein oberes und ein unteres Halteelement ausgebildet ist, und wobei mindestens eines der Halteelemente zu seiner Längenänderung und damit einhergehender Werkstücktisch-Positionsbeeinflussung mit mindestens einem Piezoaktor ausgestattet ist. Aufgrund der erfindungsgemäßen Ausgestaltung lässt sich die Werkstücktischposition mittels des mindestens einen Piezoaktors verändern oder beibehalten. Führen Werkstück- und/oder Bearbeitungsbelastungen zu Verformungen und damit zu entsprechenden Abweichungen in der Maschinengeometrie, so kann die daraus resultierende Abweichung am Werkstück durch entsprechende Positionsänderung des Werkstücktischs kompensiert oder zumindest teilweise kompensiert werden. Auch ist es möglich, auftretende Schwingungen zu kompensieren beziehungsweise zumindest teilweise zu kompensieren, indem mittels des Piezoelements durch "Gegenschwingungen" der Werkstücktisch in einer gewünschten Position gehalten wird. Da der Werkstücktisch an einer seiner Seiten am Maschinengestell gehalten ist, ist die zu dieser Seite gegenüberliegende Seite des Werkstücktischs nicht am Maschinengestell abgestützt und neigt daher bei Belastung zur Nachgiebigkeit, wodurch die Werkstücktisch-Position beeinflusst und damit die Position eines auf dem Werkstücktisch befindlichen Werkstücks verändert wird. Durch die Anordnung von mindestens zwei, beabstandet zueinander liegenden Halteelementen, die sich in ihrer Höhenposition unterscheiden, lässt sich der gesamte Werkstücktisch in seiner Position beeinflussen, wobei zumindest eines der Halteelemente in seiner Länge mittels des mindestens einen Piezoaktors verändert wird. Eine Längenveränderung des einen Halteelements gegenüber dem anderen Halteelement führt zu einer entsprechenden Kippbewegung der Seite des Werkstücktischs, an der die Befestigung am Maschinengestell vorliegt, mit der Folge, dass die quer, insbesondere rechtwinklig, dazuliegende Tischfläche des Werkstücktischs eine entsprechende Positionskorrektur erfährt. Hieraus wird deutlich, dass mit nur wenigen Mitteln und ohne zusätzliche, werkstückspezifische Maßnahmen eine Werkzeugmaschine geschaffen ist, mit der eine hochgenaue Werkstückfertigung mit perfekter Oberflächengüte möglich ist.

Bei einer Weiterbildung der Erfindung ist vorgesehen, dass das eine der Halteelemente, insbesondere das obere Halteelement, ein Festlager bildet und dass das andere der Halteelemente, insbesondere das untere Halteelement, den Piezoaktor aufweist. Die vorstehend erwähnte Kippbewegung durch Ansteuerung des Piezoaktors ist trotz der Ausbildung des einen Halteelements als Festlager, das insbesondere eine hohe Steifigkeit aufweist, möglich, da ein derartiges Lager stets eine gewisse Elastizität aufweist und die Kippbewegung daher zulässt. Alternativ kann das Festlager auch ein Schwenklager mit definierter Drehachse sein.

Nach einer Weiterbildung der Erfindung ist vorgesehen, dass die Halteelemente jeweils eine vorzugsweise horizontal verlaufende Linearführung und jeweils ein Halteglied aufweisen, wobei das Halteglied entlang der Linearführung verfahrbar geführt ist. Die Linearführung kann vorzugsweise als geradlinig verlaufende Führungsschiene ausgebildet sein. Durch die Verfahrbarkeit der Halteglieder entlang der Linearführungen ist der Werkstücktisch am Maschinengestell verfahrbar, vorzugsweise horizontal verfahrbar. Auch im Falle der Verfahrbarkeit ist vorzugsweise eines der Halteelemente als Festlager ausgebildet und das andere mit dem Piezoaktor versehen. Festlager bedeutet also nicht, dass keine Positionsveränderung entlang der Linearführung möglich ist, sondern dass das Lager steif, also spielfrei aufgebaut ist, jedoch dennoch eine hinreichende Nachgiebigkeit (Elastizität) aufweist, um durch den Piezoaktor am anderen Halteelement bewirkte Lageveränderungen zuzulassen.

Nach einer Weiterbildung der Erfindung ist vorgesehen, dass der Piezoaktor zwischen Linearführung und Maschinengestell angeordnet ist und/oder dass das Halteglied den Piezoaktor aufweist. Befindet sich der Piezoaktor zwischen der Linearführung und dem Maschinengestell, soll lässt sich die Linearführung verlagern, wodurch dann auch das entsprechende Halteglied und damit auch der Werkstücktisch verlagert wird. Befindet sich der Piezoaktor am Halteglied, so verändert die Linearführung zum Maschinengestell nicht ihre Position, jedoch verändert das Halteglied seine Länge, wodurch die Position des Werkstücktisches entsprechend verändert wird.

Vorteilhaft ist es nach einer Weiterbildung der Erfindung, wenn die Linearführung direkt an dem Maschinengestell angeordnet ist. Die vorzugsweise als geradlinige Führungsschiene ausgebildete Linearführung ist damit unmittelbar am Maschinengestell befestigt oder alternativ am Maschinengestell ausgebildet.

Eine Weiterbildung der Erfindung sieht vor, dass das Halteglied zwei elastisch aufeinander zu vorgespannte Tragelemente aufweist, zwischen denen der Piezoaktor eingeklemmt angeordnet ist. Ein so ausgebildetes Halteglied stellt aufgrund der zwei aufeinander zu vorgespannten Tragelemente, die zwischen sich den Piezoaktor aufnehmen, eine spielfrei fest zusammenhaltende Einheit dar, die insoweit eine reproduzierbare Länge aufweist und dennoch bei Aktivierung des Piezoaktors in der Länge variiert werden kann, da dies die elastische Vorspannung der Tragelemente ermöglicht, die aufgrund der Vorspannung auch dann spielfrei am Piezoaktor anliegen.

Eine andere Weiterbildung der Erfindung sieht vorzugsweise vor, dass das Halteglied ein einstückiges, insbesondere aus Massivmaterial bestehendes Tragteil aufweist, das mindestens eine Ausnehmung aufweist, in der sich der Piezoaktor insbesondere spielfrei befindet. Durch die Einstückigkeit des Halteglieds ist ein hoch maßhaltiges Bauteil geschaffen, das dennoch aufgrund der Elastizität seines Materials (Eigenelastizität) eine Längenveränderung dadurch ermöglicht, dass der sich in der Ausnehmung befindende Piezoaktor die Ausnehmung elastisch aufweitet, wodurch die entsprechenden Seiten des Tragteils mitverlagert werden. Eine derartige Ausgestaltung ist sehr steif und stark mechanisch belastbar, ohne dass es zu unerwünschten Verformungen kommt. Das Tragteil besteht insbesondere aus Massivmaterial, vorzugsweise aus Metall, insbesondere aus Stahl.

Vorzugsweise ist nach einer Weiterbildung der Erfindung vorgesehen, dass das eine der Tragelemente oder die eine Seite des Tragteils an dem Werkstücktisch insbesondere direkt oder indirekt befestigt ist. Unter "direkt" ist an den entsprechenden Stellen dieser Anmeldung zu verstehen, dass die entsprechenden Teile unmittelbar aneinander befestigt sind. "Indirekt" bedeutet, dass die beiden Teile unter Zwischenschaltung mindestens eines weiteren Bauteils aneinander befestigt sind.

Insbesondere kann ferner vorgesehen sein, dass das andere der Tragelemente oder die andere Seite des Tragteils insbesondere direkt oder indirekt an dem Maschinengestell befestigt ist.

Eine Weiterbildung der Erfindung sieht vor, dass das Halteglied einen Führungswagen aufweist, der entlang der Linearführung verfahrbar ist, wobei an dem Führungswagen das andere der Tragelemente oder die andere Seite des Tragteils befestigt ist. Demzufolge setzt sich das Halteelement - ausgehend von dem Maschinengestell - aus der Linearführung und dem dann folgenden Halteglied zusammen, wobei das Halteglied den Führungswagen aufweist. In Richtung auf den Werkstücktisch gesehen schließt sich an den Führungswagen gemäß dem einen Ausführungsbeispiel das Tragelement, dann der Piezoaktor und dann das weitere Tragelement an oder - nach dem anderen Ausführungsbeispiel - schließt sich an den Führungswagen das Tragteil an.

Bevorzugt ist vorgesehen, dass der Werkstücktisch balkonartig vom Maschinengestell wegragt. Durch die an einer seiner Seiten angeordnete Haltevorrichtung ragt der Werkstücktisch vom Maschinengestell weg. Insbesondere sind die Halteelemente einerseits an einem vorzugsweise vertikal verlaufenden Bereich des Maschinengestells angeordnet und andererseits an einem vorzugsweise vertikal verlaufenden Bereich des Werkstücktischs. Die Tischfläche des Werkstücktischs liegt vorzugsweise in einer horizontalen Ebene (sofern der Werkstücktisch in sich nicht zusätzlich verstellbar ist).

Liegt keine "In-sich-Verstellmöglichkeit" des Werkstücktischs vor, so handelt es sich um einen Starrtisch. Alternativ kann vorgesehen sein, dass der Werkstücktisch ein Schwenktisch ist, der eine mit der Haltevorrichtung verbundene Basis aufweist, an der schwenkbar eine Tischanordnung gelagert ist. Die Basis ist bevorzugt mittels der Haltevorrichtung am Maschinengestell befestigt. Die Schwenkachse verläuft vorzugsweise in horizontaler Richtung und ermöglicht es, die Tischanordnung relativ zur Basis zu verschwenken.

Nach einem bevorzugten Ausführungsbeispiel der Erfindung ist vorgesehen, dass auf ein und derselben Höhenposition mehrere Halteelemente angeordnet sind, die jeweils ohne oder mit mindestens einem Piezoaktor ausgestattet sind. Beispielsweise können sich auf einer Höhenposition zwei Halteelemente und auf einer anderen Höhenposition ebenfalls zwei Halteelemente befinden. Mindestens eines der Halteelemente ist mit dem Piezoaktor ausgestattet. Wird dieser aktiviert, so wird der Werkstücktisch sowohl eine Kippbewegung um eine horizontale Achse als auch um eine vertikale Achse vornehmen. Werden alle Halteelemente einer Höhenposition mit Piezoaktoren ausgestattet und werden diese auch gleich angesteuert, sodass gleiche Längenänderungen erfolgen, so wird der Werkstücktisch um eine horizontale Achse gekippt. Sind zwei Halteelemente auf unterschiedlichen Höhenpositionen jedoch etwa oder genau auf ein und derselben vertikalen Fluchtung mit Piezoaktoren versehen und werden diese aktiviert, so erfolgt eine Verkippbewegung des Werkstücktisches um eine vertikale Achse. Je nach Anzahl der mit oder ohne Piezoaktor versehenen Halteelemente und deren Positionierung sowie der Anzahl der verwendeten Höhenpositionen ist - entsprechend dem vorstehend erwähnten, relativ einfachen Ausführungsbeispiel - entsprechende Verlagerungsbewegungen des Werkstücktischs möglich. Die Erfindung ist daher nicht auf das vorstehend erwähnte mit vier Halteelementen versehene Ausführungsbeispiel beschränkt, sondern es können auch mehr oder weniger Halteelemente auf entsprechend gleichen oder verschiedenen Höhenpositionen und/oder horizotal versetzt liegenden Positionen, und/oder auch schräg horizontal versetzt liegenden Positionen vorgesehen sein, wobei diese jeweils ohne oder mit Piezoaktor ausgestattet sein können.

Ein bevorzugtes Ausführungsbeispiel der Erfindung sieht vor, dass der Piezoaktor in Abhängigkeit von mindestens einem Sensor, insbesondere Lagesensor und/oder Geschwindigkeitssensor und/oder Beschleunigungssensor, der Werkzeugmaschine angesteuert wird. Dieser Sensor stellt daher einen Aufnehmer dar, der unerwünschte Verformungen oder Schwingungen der Werkzeugmaschine registriert und dazu führt, dass der mindestens eine Piezoaktor entsprechend angesteuert wird, damit dieser seine Länge ändert, um so den Verformungen und/oder Schwingungen entgegenzuwirken.

Bevorzugt ist der Sensor als Dehnmessstreifen ausgebildet.

Schließlich ist es vorteilhaft, wenn eine Steuer- und/oder Regeleinheit vorgesehen ist, die den mindestens einen Piezoaktor in Abhängigkeit von von dem mindestens einen Sensor gelieferten Informationen ansteuert.

Die Zeichnungen veranschaulichen die Erfindung anhand von Ausführungsbeispielen und zwar zeigt:
- Figur 1: eine schematische Darstellung einer Werkzeugmaschine mit Werkstücktisch,
- Figur 2: eine Werkzeugmaschine mit Werkstücktisch nach einem weiteren Ausführungsbeispiel,
- Figur 3: ein Halteelement, mit dem der Werkstücktisch an einem Maschinengestell der Werkzeugmaschine befestigt ist und
- Figur 4: eine der Figur 3 entsprechende Darstellung gemäß einem weiteren Ausführungsbeispiel.

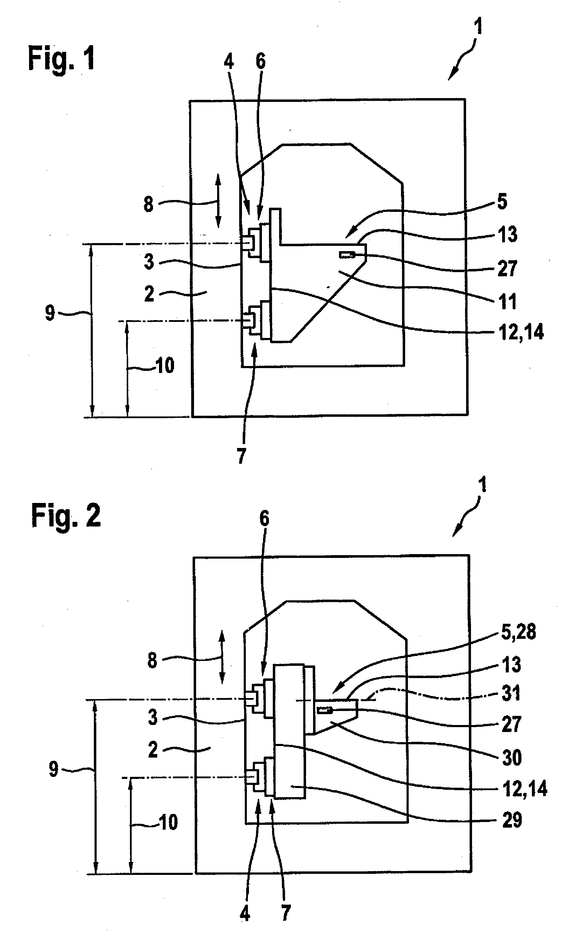

Die Figur 1 zeigt - in schematischer Darstellung - Teile einer Werkzeugmaschine 1, die ein Maschinengestell 2 aufweist. Das Maschinengestell 2 weist eine Vertikalwand 3 auf, an der mittels einer Haltevorrichtung 4 ein Werkstücktisch 5 angeordnet ist. Die Haltevorrichtung 4 weist zwei beabstandet zueinander liegende Halteelemente 6, 7 auf, die sich - bezogen auf die vertikale Richtung (Pfeil 8) der Vertikalwand 3 - auf unterschiedlichen Höhenpositionen 9, 10 befinden. Mittels der beiden Halteelemente 6, 7 ist der Werkstücktisch 5 am Maschinengestell 2 gehalten.

Im Ausführungsbeispiel der Figur 1 ist der Werkstücktisch 5 als Starrtisch 11 ausgebildet. Er besitzt eine vertikal verlaufende Rückwand 12, zu der quer, insbesondere rechtwinklig, eine Tischfläche 13 verläuft, die der Aufnahme eines nicht dargestellten Werkstücks oder einer nicht dargestellten Werkstückpalette dient. Wie aus der Figur 1 ersichtlich ist, ist der Werkstücktisch 5 an einer seiner Seiten 14, nämlich an seiner Rückwand 12, mittels der Haltevorrichtung 4 am Maschinengestell 2 gehalten. Da die Tischfläche 13 quer, insbesondere rechtwinklig zur Seite 14 verläuft, ragt der Werkstücktisch 5 balkonartig vom Maschinengestell 2 weg.

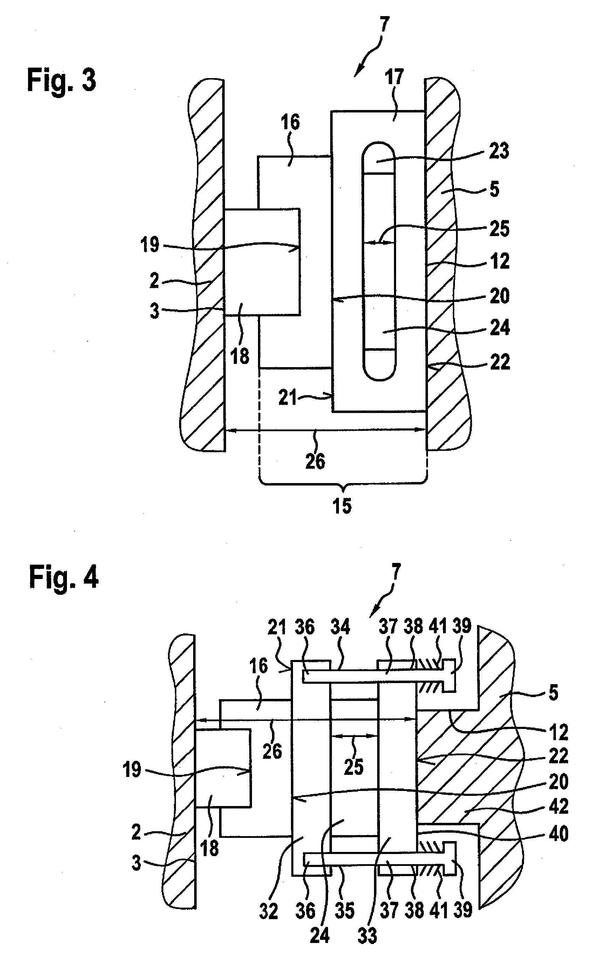

Die Figur 3 verdeutlicht die Ausbildung der Halteelemente 6, 7. Die Figur 3 zeigt nur einen Abschnitt des Maschinengestells 2 sowie einen Abschnitt des Werkstücktischs 5 im Bereich seiner Rückwand 12. In der Figur 3 ist konkret das Halteelement 7, also das gemäß

Figur 1 untere Halteelement (Höhenposition 10) dargestellt. Auf das Halteelement 6 wird nachstehend noch ebenfalls eingegangen.

Das Halteelement 7 der Figur 3 weist ein Halteglied 15 auf, das sich - ausgehend vom Maschinengestell 2 in Richtung auf den Werkstücktisch 5 - aus einem Führungswagen 16 und ein Tragteil 17 zusammensetzt. Ferner weist das Halteelement 7 eine Linearführung 18 auf, die als geradlinig verlaufende Führungsschiene ausgebildet ist. Die Linearführung 18 verläuft in horizontaler Richtung und ist direkt am Maschinengestell 2, insbesondere an der Vertikalwand 3, befestigt (Figur 1). Demzufolge ist das Halteglied 15, nämlich sein Führungswagen 16, entlang der Linearführung 18 in die Zeichnungsebene der Figur 3 hinein und auch wieder heraus verfahrbar, woraus folgt, dass der Werkstücktisch 5 entsprechend horizontal am Maschinengestell 2 verlagert werden kann. Der Führungswagen 16 ist mit seiner einen Seite 19 an der Linearführung 18 geführt und mit seiner anderen Seite 20 mit einer Seite 21 des Tragteils 17 verbunden, dessen andere Seite 22 mit der Rückwand 12 des Werkstücktischs 5 verbunden ist. Das Tragteil 17 ist aus Massivmaterial, insbesondere Stahl, vorzugsweise einstückig hergestellt. Es besitzt eine langlochartige Ausnehmung 23, die zwischen den beiden Seiten 21 und 22 liegt. In der Ausnehmung 23 ist spielfrei ein Piezoaktor 24 angeordnet, der entsprechend elektrisch angesteuert werden kann (nicht dargestellt), wodurch er seine Abmessung 25 verändert, mit der Folge, dass er das Tragteil 17 elastisch verformt, wodurch die Seiten 21 und 22 eine entsprechend große Abstandsveränderung erfahren. Die Folge davon ist, dass sich die Länge 26 des Halteelements 7 vergrößert beziehungsweise verkleinert, wodurch der Werkstücktisch 5 auf Höhe des Halteelements 7 einen entsprechend größeren beziehungsweise kleineren Abstand von dem Maschinengestell 2 erhält.

Das Halteelement 6, das - gemäß Figur 1 - ein oberes Halteelement bildet (Höhenposition 9), ist ebenso wie das Halteelement 7 der Figur 3 ausgebildet, jedoch weist das Tragteil 17 keinen Piezoaktor 24 auf, sodass - wenn gewünscht - auch die Ausnehmung 23 entfallen kann. Das Halteelement 6 bildet insoweit ein Festlager, da es aufgrund des fehlenden Piezoaktors eine insoweit feste Position einnimmt. Dies bedeutet trotzdem, dass es - ebenso wie das Halteelement 7 - entlang der ihm zugeordneten Linearführung 18 verfahrbar ist. Dieses Festlager, das - wie jedes noch so "strammes Lager" - natürlich eine gewisse Elastizität aufweist, hält den Werkstücktisch 5 in gleichbleibendem Abstand zum Maschinengestell 2, während das Halteelement 7 aufgrund des Piezoaktors 24 eine Änderung der Länge 26 vornehmen kann. Die Folge ist, dass hierdurch ein Verkippen des Werkstücktisches 5 um eine horizontale Achse, die durch das Halteelement 6 verläuft, erfolgt, also eine Werkstücktisch-Positionsbeeinflussung vorgenommen werden kann.

Die Anordnung ist nun so getroffen, dass eine nicht dargestellte Regeleinheit vorgesehen ist, die den Piezoaktor 24 in Abhängigkeit von einem von einem Sensor 27 gelieferten Informationssignal ansteuert. Der Sensor 27, der lediglich schematisch in der Figur 1 gezeigt ist und dessen Einbauposition in der Figur 1 lediglich beispielhaft im Werkstücktisch 5 wiedergegeben ist (er könnte sich auch an einer ganz anderen Stelle der Werkzeugmaschine 1 befinden), nimmt Verformungen und/oder Schwingungen der Werkzeugmaschine 1 auf und beeinflusst die Regeleinheit, die - zur Kompensation der Verformung und/oder Schwingungen - den Piezoaktor 24 entsprechend ansteuert. Die erwähnten Verformungen und/oder Schwingungen treten im Betrieb der Werkzeugmaschine 1 auf, beispielsweise durch das Bearbeiten eines auf der Tischfläche 13 des Werkstücktischs 5 aufgespannten Werkstücks.

Die Anordnung kann nun so getroffen sein, dass - ansonsten entsprechend ähnlich zur Figur 1 - zwei Halteelemente 6 und zwei Halteelemente 7 jeweils auf gleicher Höhenposition 9 beziehungsweise 10 beabstandet zueinander vorgesehen sind, sodass der Werkstücktisch 5 mittels vier beabstandet zueinander liegenden Halteelementen 6, 7 am Maschinengestell 2 gehalten ist. Hiervon bilden die beiden oberen Halteelemente 6 Festlager (ohne Piezoaktoren) und die beiden unteren Halteelemente 7 weisen Piezoaktoren 24 auf, die von der nicht dargestellten Regeleinheit in Abhängigkeit von Signalen des Sensors 27 synchron angesteuert werden.

Die Figur 2 zeigt ein weiteres Ausführungsbeispiel einer Werkzeugmaschine 1, die ebenso wie die Werkzeugmaschine 1 der Figur 1 aufgebaut ist, sodass alle Ausführungen zur Figur 1 ebenso bei der Ausführungsform der Figur 2 gelten. Unterschiedlich ist lediglich, dass der Werkstücktisch 5 nicht - wie bei der Figur 1 - als Starrtisch 11, sondern als Schwenktisch 28 ausgebildet ist, der eine Basis 29 aufweist, die mit der Haltevorrichtung 5, also mit den Halteelementen 6, 7, verbunden ist. An der Basis 29 ist eine Tischanordnung 30 um eine Schwenkachse 31 schwenkbar gelagert. Die Schwenkachse 31 verläuft horizontal. Die Tischanordnung 30 weist die Tischfläche 13 auf. Der übrige Aufbau und die Funktionen des Ausführungsbeispiels der Figur 2 entsprechen dem der Figuren 1 und 3.

Die Figur 4 weist einen zur Figur 3 alternativen Aufbau des Halteelements 7 auf, der beim Ausführungsbeispiel der Figur 1 oder 2 zum Einsatz gelangen kann. Grundsätzlich entspricht der Aufbau des Halteelements 7 der Figur 3 dem Aufbau des Halteelements 7 der Figur 4, sodass auf die entsprechenden Ausführungen der Figur 3 verwiesen wird. Unterschiedlich ist lediglich, dass anstelle des Tragteils 17 beim Ausführungsbeispiel der Figur 4 eine Anordnung von einem ersten Tragelement 32 und einem zweiten Tragelement 33 tritt, die zwischen sich den Piezoaktor 24 aufnehmen. Die beiden Tragelemente 32 und 33 sind elastisch aufeinander zu vorgespannt. Diese Vorspannung wird dadurch erzeugt, dass zwei mit Abstand zueinander liegende Bolzen 34, 35 vorgesehen sind, die mit ihren Enden 36 am Tragelement 32 festgelegt sind und deren Schäfte 37 Führungsbohrungen 38 des Tragteils 33 durchsetzen. Die Bolzen 34, 35 weisen Köpfe 39 auf, die mit Abstand zur Außenseite 40 des Tragteils 33 liegen, wobei der so gebildete Abstand jeweils von einer Tellerfeder 41 aufgefüllt ist. Hierdurch klemmen die Tragelemente 32 und 33 den Piezoaktor 34 zwischen sich ein. Die aufgrund der Tellerfedern 41 insoweit nachgiebige Anordnung gestattet Längenänderungen, die durch Ansteuerung des Piezoaktors 24 auftreten, durchzuführen, wodurch - ebenso wie beim Ausführungsbeispiel der Figur 3 beschrieben - eine Werkstücktisch-Positionsbeeinflussung erfolgen kann. Aufgrund der vorspringenden Köpfe 39 der Bolzen 34, 35 ist die Rückwand 12 des Werkstücktischs 5 mit einem Vorsprung 42 versehen, der zwischen den Köpfen 39 liegt.

Aufgrund der erfindungsgemäßen Ausgestaltung kann ein Abkippen des Werkstücktischs 5 respektive können entsprechend auftretende Winkelfehler korrigiert werden. Unerwünschte Schwingungen können durch dynamisches Eingreifen des Piezoaktors 24 gedämpft werden. Bei der Werkstückbearbeitung und/oder aufgrund unterschiedlich schwerer Werkstücke kommt es zu unterschiedlichen Lasten am Werkstücktisch 5 und zu entsprechenden Winkelfehlern am Werkstück, wobei erfindungsgemäß dieser Winkelfehler jedoch durch entsprechendes Ansteuern des Piezoaktors korrigiert werden. Unerwünschte Schwingungen im Bearbeitungsprozess werden durch Gegenschwingungen des Piezoaktors 24 gedämpft. Der Piezoaktor 24 wird daher zur aktiven Korrektur auftretender Geometriefehler der Werkzeugmaschine 1 verwendet. Der Piezoaktor 24 kann statische und/oder auch dynamische Korrekturen vornehmen. Auftretende Geometriefehler in der Maschinenkinematik werden aufgrund der Erfindung komplett korrigiert und die gefertigten Werkstücke weisen eine hohe Genauigkeit auf. Diese Genauigkeit ist nicht vom Werkstückgewicht abhängig. Unerwünschte Schwingungen werden aufgrund der Erfindung gedämpft, die Arbeitsleistung kann daher erhöht werden und die Werkstückgenauigkeit und die Werkstückoberflächengüte nehmen zu. Der Sensor 27, der insbesondere als Dehnmessstreifen ausgebildet sein kann, nimmt die effektive Verformung (Belastung) auf und steuert dementsprechend die Regeleinheit an, die wiederum den Piezoaktor 24 ansteuert, der mit einer entsprechenden Längenänderung reagiert. Diese Längenänderung hat die Geometriekorrektur innerhalb der Werkzeugmaschine 1 zur Folge.

Wenn im Zuge dieser Anmeldung von nur einem Piezoaktor 24 und/oder von nur einem Sensor 27 gesprochen wird, so können natürlich auch mehrere derartige Bauteile an unterschiedlichen Positionen vorgesehen sein.

## Patentansprüche

1. Werkzeugmaschine mit einem Maschinengestell und einem Werkstücktisch, **dadurch gekennzeichnet, dass** der Werkstücktisch (5) an einer seiner Seiten (14) mittels einer Haltevorrichtung (4) am Maschinengestell (2) gehalten ist, wobei die Haltevorrichtung (4) mindestens zwei, an der genannten Seite (14) des Werkstücktischs (5) beabstandet zueinander liegende Halteelemente (6,7) aufweist, die auf unterschiedlichen Höhenpositionen (9,10) angeordnet sind, sodass ein oberes und ein unteres Halteelement (6,7) ausgebildet ist, und wobei mindestens eines der Halteelemente (6,7) zu seiner Längenänderung und damit einhergehender Werkstücktisch-Positionsbeeinflussung mit mindestens einem Piezoaktor (24) ausgestattet ist.

2. Werkzeugmaschine nach Anspruch 1, **dadurch gekennzeichnet, dass** das eine der Halteelemente (6,7), insbesondere das obere Halteelement (6), ein Festlager bildet und dass das andere der Halteelemente (7,6), insbesondere das untere Halteelement (7), den Piezoaktor (24) aufweist.

3. Werkzeugmaschine nach einem der vorhergehenden Ansprüche, **dadurch gekennzeichnet, dass** die Halteelemente (6,7) jeweils eine vorzugsweise horizontal verlaufende Linearführung (18) und jeweils ein Halteglied (15) aufweisen, wobei das Halteglied (15) entlang der Linearführung (18) verfahrbar geführt ist.

4. Werkzeugmaschine nach einem der vorhergehenden Ansprüche, **dadurch gekennzeichnet, dass** der Piezoaktor (24) zwischen Linearführung (18) und Maschinengestell (2) angeordnet ist und/oder dass das Halteglied (15) den Piezoaktor (24) aufweist.

5. Werkzeugmaschine nach einem der vorhergehenden Ansprüche, **dadurch gekennzeichnet, dass** die Linearführung (18) direkt an dem Maschinengestell (2) angeordnet ist.

6. Werkzeugmaschine nach einem der vorhergehenden Ansprüche, **dadurch gekennzeichnet, dass** das Halteglied (15) zwei elastisch aufeinander zu vorgespannte Tragelemente (32,33) aufweist, zwischen denen der Piezoaktor (24) eingeklemmt angeordnet ist.

7. Werkzeugmaschine nach einem der vorhergehenden Ansprüche, **dadurch gekennzeichnet, dass** das Halteglied (15) ein einstückiges, insbesondere aus Massivmaterial bestehendes Tragteil (17) aufweist, das mindestens eine Ausnehmung (23) aufweist, in der sich der Piezoaktor (24) insbesondere spielfrei befindet.

8. Werkzeugmaschine nach einem der vorhergehenden Ansprüche, **dadurch gekennzeichnet, dass** das Tragteil (17) aus Metall, insbesondere aus Stahl, besteht.

9. Werkzeugmaschine nach einem der vorhergehenden Ansprüche, **dadurch gekennzeichnet, dass** das eine der Tragelemente (33,32) oder die eine Seite (22) des Tragteils (17) an dem Werkstücktisch (5) insbesondere direkt oder indirekt befestigt ist.

10. Werkzeugmaschine nach einem der vorhergehenden Ansprüche, **dadurch gekennzeichnet, dass** das andere der Tragelemente (32,33) oder die andere Seite (21) des Tragteils (17) insbesondere direkt oder indirekt an dem Maschinengestell (2) befestigt ist.

11. Werkzeugmaschine nach einem der vorhergehenden Ansprüche, **dadurch gekennzeichnet, dass** das Halteglied (15) einen Führungswagen (16) aufweist, der entlang der Linearführung (18) verfahrbar ist und an dem das andere der Tragelemente (32,33) oder die andere Seite (21) des Tragteils (17) befestigt ist.

12. Werkzeugmaschine nach einem der vorhergehenden Ansprüche, **dadurch gekennzeichnet, dass** der Werkstücktisch (5) balkonartig vom Maschinengestell (2) wegragt.

13. Werkzeugmaschine nach einem der vorhergehenden Ansprüche, **dadurch gekennzeichnet, dass** der Werkstücktisch (5) ein Starrtisch (11) ist.

14. Werkzeugmaschine nach einem der vorhergehenden Ansprüche, **dadurch gekennzeichnet, dass** der Werkstücktisch (5) ein Schwenktisch (28) ist, der eine mit der Haltevorrichtung (4) verbundene Basis (29) aufweist, an der schwenkbar eine Tischanordnung (30) gelagert ist.

15. Werkzeugmaschine nach einem der vorhergehenden Ansprüche, **dadurch gekennzeichnet, dass** auf ein und derselben Höhenposition (9,10) mehrere Halteelemente (6,7) angeordnet sind, die jeweils ohne oder mit mindestens einem Piezoaktor (24) ausgestattet sind.

16. Werkzeugmaschine nach einem der vorhergehenden Ansprüche, **dadurch gekennzeichnet, dass** der Piezoaktor (24) in Abhängigkeit von mindestens einem Sensor (27), insbesondere Verformungssensor und/oder Lagesensor und/oder Geschwindigkeitssensor und/oder Beschleunigungssensor, der Werkzeugmaschine (1) angesteuert wird.

17. Werkzeugmaschine nach einem der vorhergehenden Ansprüche, **dadurch gekennzeichnet, dass** der Sensor (27) ein Dehnmessstreifen ist.

18. Werkzeugmaschine nach einem der vorhergehenden Ansprüche, **gekennzeichnet durch** eine Steuer- und/oder Regeleinheit, die den Piezoaktor (24) in Abhängigkeit von von dem Sensor (27) gelieferten Informationen ansteuert.

## Claims

1. Machine tool having a machine frame and a workpiece table, **characterized in that** the workpiece table (5), on one of its sides (14), is held on the machine frame (2) by means of a holding device (4), the holding device (4) having at least two holding elements (6, 7), which are spaced apart from one another on the said side (14) of the workpiece table (5) and which are disposed at differing height positions (9, 10), such that an upper and a lower holding element (6, 7) is realized, and at least one of the holding elements (6, 7) being equipped with at least one piezo actuator (24) for altering its length and, associated therewith, influencing the position of the workpiece table.

2. Machine tool according to Claim 1, **characterized in that** one of the holding elements (6, 7), in particular the upper holding element (6), constitutes a fixed bearing, and the other of the holding elements (7, 6), in particular the lower holding element (7), is provided with the piezo actuator (24).

3. Machine tool according to any one of the preceding claims, **characterized in that** the holding elements (6, 7) each have a linear guide (18), preferably extending horizontally, and each have a holding member (15), the holding member (15) being guided so as to be movable along the linear guide (18).

4. Machine tool according to any one of the preceding claims, **characterized in that** the piezo actuator (24) is disposed between the linear guide (18) and the machine frame (2) and/or the holding member (15) is provided with the piezo actuator (24).

5. Machine tool according to any one of the preceding claims, **characterized in that** the linear guide (18) is disposed directly on the machine frame (2).

6. Machine tool according to any one of the preceding claims, **characterized in that** the holding member (15) has two carrier elements (32, 33), elastically biased towards one another, between which the piezo actuator (24) is disposed in a clamped manner.

7. Machine tool according to any one of the preceding claims, **characterized in that** the holding member (15) has a single-piece carrier part (17), in particular composed of solid material, which has at least one recess (23) in which the piezo actuator (24) is located, in particular without play.

8. Machine tool according to any one of the preceding claims, **characterized in that** the carrier part (17) is composed of metal, in particular of steel.

9. Machine tool according to any one of the preceding claims, **characterized in that** one of the carrier elements (33, 32) or one side (22) of the carrier part (17) is fastened, in particular directly or indirectly, to the workpiece table (5).

10. Machine tool according to any one of the preceding claims, **characterized in that** the other of the carrier elements (32, 33) or the other side (21) of the carrier part (17) is fastened, in particular directly or indirectly, to the machine frame (2).

11. Machine tool according to any one of the preceding claims, **characterized in that** the holding member (15) has a guide carriage (16), which can be moved along the linear guide (18), and to which the other of the carrier elements (32, 33) or the other side (21) of the carrier part (17) is fastened.

12. Machine tool according to any one of the preceding claims, **characterized in that** the workpiece table (5) projects away from the machine frame (2) in the manner of a balcony.

13. Machine tool according to any one of the preceding claims, **characterized in that** the workpiece table (5) is a rigid table (11).

14. Machine tool according to any one of the preceding claims, **characterized in that** the workpiece table (5) is a swivelling table (28), which has a base (29), which is connected to the holding device (4) and on which a table arrangement (30) is mounted such that it can be swivelled.

15. Machine tool according to any one of the preceding claims, **characterized in that** a plurality of holding elements (6, 7), each being without a piezo actuator (24) or being equipped with at least one piezo actuator (24), are disposed at one and the same height position (9, 10).

16. Machine tool according to any one of the preceding claims, **characterized in that** the piezo actuator (24) is controlled in dependence on at least one sensor (27), in particular a deformation sensor and/or position sensor and/or speed sensor and/or acceleration sensor, of the machine tool (1).

17. Machine tool according to any one of the preceding claims, **characterized in that** the sensor (27) is a strain gauge.

18. Machine tool according to any one of the preceding claims, **characterized by** a control unit and/or feedback control unit, which controls the piezo actuator (24) in dependence on information supplied by the sensor (27).

## Revendications

1. Machine-outil présentant un bâti de machine et une table à pièces,
**caractérisée en ce que**
la table (5) à pièces est maintenue par un (14) de ses côtés sur le bâti (2) de la machine au moyen d'un dispositif de maintien (4),
**en ce que** le dispositif de maintien (4) présente au moins deux éléments de maintien (6, 7) situés à distance l'un de l'autre sur ledit côté (14) de la table (5) à pièces et disposés en différentes positions en hauteur (9, 10) de manière à former un élément inférieur et un élément supérieur de maintien (6, 7) et
**en ce qu'**au moins l'un des éléments de maintien (6,7) est équipé d'au moins un piézoactionneur (24) qui modifie sa longueur et agit ainsi sur la position de la table à pièces.

2. Machine-outil selon la revendication 1, **caractérisée en ce que** l'un des éléments de maintien (6, 7), en particulier l'élément supérieur de maintien (6), forme un palier fixe et **en ce que** l'autre des éléments de maintien (6, 7), en particulier l'élément inférieur de maintien (7), présente le piézoactionneur (24).

3. Machine-outil selon l'une des revendications précédentes, **caractérisée en ce que** chacun des éléments de maintien (6, 7) présente un guide linéaire (18) qui s'étend de préférence à l'horizontale et un organe de maintien (15), l'organe de maintien (15) étant guidé à déplacement le long du guide linéaire (18).

4. Machine-outil selon l'une des revendications précédentes, **caractérisée en ce que** le piézoactionneur (24) est disposé entre le guide linéaire (18) et le bâti (2) de la machine et/ou **en ce que** l'organe de maintien (15) présente le piézoactionneur (24).

5. Machine-outil selon l'une des revendications précédentes, **caractérisée en ce que** le guide linéaire (18) est disposé directement sur le bâti (2) de la machine.

6. Machine-outil selon l'une des revendications précédentes, **caractérisée en ce que** l'organe de maintien (15) présente deux éléments de support (32, 33) serrés élastiquement l'un contre l'autre et entre lesquels le piézoactionneur (24) est serré.

7. Machine-outil selon l'une des revendications précédentes, **caractérisée en ce que** l'organe de maintien (15) présente une partie de support (17) d'un seul tenant, en particulier constituée d'un matériau massif, qui présente au moins une découpe (23) dans laquelle le piézoactionneur (24) est placé en particulier sans jeu.

8. Machine-outil selon l'une des revendications précédentes, **caractérisée en ce que** la partie de support (17) est réalisée en métal et en particulier en acier.

9. Machine-outil selon l'une des revendications précédentes, **caractérisée en ce que** l'un des éléments de support (33, 32) ou un côté (22) de la partie de support (17) sont fixés en particulier directement ou indirectement sur la table (5) à pièces.

10. Machine-outil selon l'une des revendications précédentes, **caractérisée en ce que** l'autre des éléments de support (32, 33) ou l'autre côté (21) de la partie de support (17) sont fixés en particulier directement ou indirectement sur le bâti (2) de la machine.

11. Machine-outil selon l'une des revendications précédentes, **caractérisée en ce que** l'organe de maintien (15) présente un chariot de guidage (16) qui peut être déplacé le long du guide linéaire (18) et sur lequel l'autre des éléments de support (32, 33) ou l'autre côté (21) de la partie de support (17) sont fixés.

12. Machine-outil selon l'une des revendications précédentes, **caractérisée en ce que** la table (5) à pièces déborde en balcon du bâti (2) de la machine.

13. Machine-outil selon l'une des revendications précédentes, **caractérisée en ce que** la table (5) à pièces est une table rigide (11).

14. Machine-outil selon l'une des revendications précédentes, **caractérisée en ce que** la table (5) à pièces est une table pivotante (28) qui présente un socle (29) relié au dispositif de maintien (4) et sur lequel un ensemble de table (30) est monté à pivotement.

15. Machine-outil selon l'une des revendications précédentes, **caractérisée en ce que** plusieurs éléments de maintien (6, 7) qui sont tous équipés ou non d'au moins un piézoactionneur (24) sont disposés en une seule et même position en hauteur (9, 10).

16. Machine-outil selon l'une des revendications précédentes, **caractérisée en ce que** le piézoactionneur (24) est commandé en fonction d'au moins une sonde (27), en particulier une sonde de déformation et/ou une sonde de position et/ou une sonde de vitesse et/ou une sonde d'accélération, de la machine-outil (1).

17. Machine-outil selon l'une des revendications précédentes, **caractérisée en ce que** la sonde (27) est un ruban de mesure d'allongement.

18. Machine-outil selon l'une des revendications précédentes, **caractérisée par** une unité de commande et/ou de régulation qui commande le piézoactionneur (24) en fonction des informations délivrées par la sonde (27).
